# FASCICULE DE BREVET EUROPEEN

(11) **EP 2 039 274 B1**
(45) Date de publication et mention de la délivrance du brevet: **11.04.2012**
(21) Numéro de dépôt: 08164402.3
(22) Date de dépôt: 16.09.2008
(51) Int. Cl.: A47J 37/12, A47G 23/06

(54) **Ensemble ménager comportant un appareil de cuisson et un plateau**
Haushalts-Kombigerät, das ein Kochgerät und eine Platte umfasst
Household assembly comprising a cooking appliance and a tray

(30) Priorité: 20.09.2007 FR 0706612
(43) Date de publication de la demande: 25.03.2009
(73) Titulaire: Seb S.A., 69130 Ecully (FR)
(72) Inventeur: Moine, Olivier, 73100, AIX LES BAINS (FR); Gouthiere, Christophe, 74150, RUMILLY (FR)
(74) Mandataire: Lemoine, Jean-Sébastien

(56) Documents cités:
- EP-A- 0 230 872
- US-A- 3 543 674

## Description

La présente invention concerne un ensemble ménager qui comporte un appareil de cuisson et un plateau permettant de supporter et transporter l'appareil.

On connaît de nombreux plateaux qui sont utilisés dans le domaine des articles de cuisine permettant de transporter différents types d'ustensiles, dont des appareils de cuisson.

Le document US 3 543 674 A est considéré comme utile pour la compréhension de l'invention.

Cependant, il s'avère que les plateaux connus ne sont pas très pratiques pour transporter des appareils de cuisson qui nécessitent une certaine précaution, par exemple du type appareil à fondue. En effet, pour ce type d'appareil, il est usuel de faire préchauffer l'huile de cuisson, de la verser dans le caquelon qui se trouve sur un plan de travail, et d'amener le tout à la table du repas. Le transport d'un appareil à fondue (qui est un récipient ouvert) contenant de l'huile chaude demande toujours beaucoup d'attention.

La présente invention vise à réaliser un nouveau plateau destiné à transporter des appareils de cuisson, notamment des appareils à fondue.

L'invention est un ensemble ménager comme défini dans la revendication 1, comprenant, d'une part, un appareil de cuisson qui comporte une base chauffante et un récipient de cuisson supporté, de façon amovible, par la base chauffante quand l'appareil de cuisson est dans son état d'utilisation, et, d'autre part, un plateau adapté à supporter l'appareil de cuisson et qui comporte une plaque de réception horizontale pour la réception l'appareil et des organes de préhension pour la préhension du plateau. Selon l'invention, les organes de préhension s'étendent verticalement au-delà du plan supérieur de la base chauffante quand celle-ci repose sur la plaque de réception.

De ce fait, les organes de préhension se trouvent fortement surélevées par rapport au centre de gravité, ce qui rend l'ensemble beaucoup plus stable et, dans le cas d'un appareil à fondue, permet de contenir de façon beaucoup plus sure l'huile chaude dans le caquelon qui forme le récipient de cuisson.

D'autres particularités et avantages apparaîtront dans la description d'un mode de réalisation donné à titre d'exemple non limitatif et illustré dans les dessins mis en annexe dans lesquels :
La figure 1 est une vue en perspective de haut d'un plateau conforme à au présent mode de réalisation ;
La figure 2 est une vue en coupe verticale de l'ensemble ménager conforme à la présente invention, selon un plan vertical passant par le centre des organes de préhension du plateau ; et
La figure 3 est une vue en coupe verticale de l'ensemble ménager conforme à la présente invention, selon le plan médian perpendiculaire à celui de la figure 2.

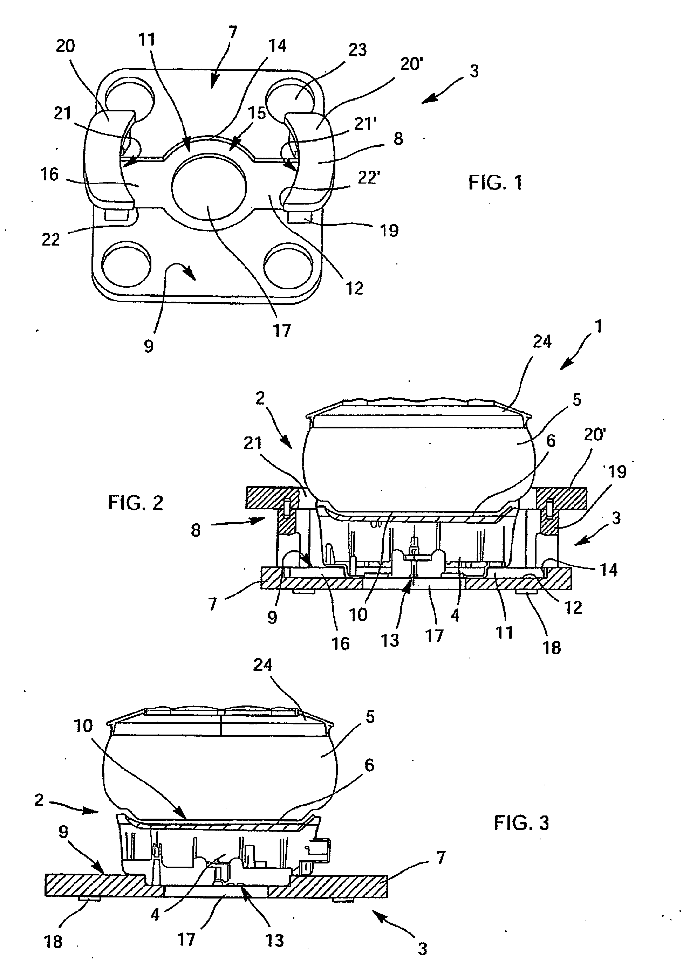

Comme on peut le voir aux figures 2 et 3, un ensemble ménager 1 comprend un appareil de cuisson 2 (en l'occurrence, un appareil à fondue 2) et un plateau 3 qui est adapté à supporter l'appareil de cuisson 2.

L'appareil de cuisson 2 (ici un appareil électrique) comporte une base chauffante 4 (en l'occurrence une base chauffante électrique 4) et un récipient de cuisson 5 (en l'occurrence un caquelon 5) qui est supporté, de façon amovible, par la base chauffante 4 quand l'appareil de cuisson 2 est dans son état d'utilisation. Ici, en utilisation, le caquelon 5 repose directement sur la surface supérieure 6 de la base chauffante 4 qui forme une surface de chauffe.

Par ailleurs, comme on peut le voir à la figure 1, le plateau 3 comporte une plaque de réception 7 qui s'étend selon un plan horizontal et qui reçoit l'appareil de cuisson 2, et des organes de préhension 8 (ici, deux organes de préhension 8) pour la préhension du plateau 3 qui s'étendent verticalement au-delà du plan supérieur de la base chauffante 4 (en l'occurrence, au-delà de la surface de chauffe 6) quand celle-ci repose sur la plaque de réception 7.

La plaque de réception 7 comprend une surface de réception 9 qui est adaptée à recevoir la paroi de fond 10 de récipient de cuisson 5. Ceci est le cas quand l'appareil de cuisson 2 est dans sa configuration de rangement : la base chauffante 4 est disposée dans le récipient de cuisson 5 qui repose sur la plaque de réception 7.

Afin d'améliorer la stabilité de l'appareil de cuisson 2 quand il est dans son état d'utilisation, la plaque de réception 7 comprend des organes de maintien 11 qui sont adaptés à recevoir et à stabiliser la base chauffante 4. En l'occurrence, les organes de maintien 11 sont formés par une empreinte 11 réalisée dans la surface de réception 9. L'empreinte 11 est délimitée par une cloison de fond 12 horizontale adaptée à recevoir la paroi de fond 13 de la base chauffante 4, et une cloison périphérique 14 sensiblement verticale limitant tout mouvement de translation de la base dans le plan horizontal. Dans le présent mode de réalisation, l'empreinte 11 comprend une zone centrale 15 qui est de forme essentiellement circulaire et qui est adaptée à recevoir la base chauffante 4, et deux cavités longitudinales 16 qui sont diamétralement opposées et qui sont adaptées à recevoir des ustensiles de manipulation d'aliment associés à l'appareil de cuisson (en l'occurrence des pics à fondue). Ici, le diamètre de la zone centrale 15 est supérieur à celui de la paroi de fond 13 de la base chauffante 4, et inférieur à celui de la paroi de fond 10 du récipient de cuisson 5.

En outre, afin d'améliorer l'aération de la base chauffante 4 quand l'appareil de cuisson 2 quand l'appareil est utilisé, la cloison de fond 12 de l'empreinte 11 (plus précisément, ici, la zone centrale 15) comprend un orifice d'aération 17 qui traverse la plaque de réception 7, le plateau 3 comportant par ailleurs des pieds 18 permettant une circulation de l'air sous la plaque 7.

De façon avantageuse, et pour améliorer d'avantage la sécurité du transport de l'appareil de cuisson 2, surtout quand le récipient de cuisson 5 comprend de l'huile chaude, les organes de préhension 8 sont conformés et agencés de façon à former des organes stabilisant le récipient de cuisson 5 quand il est disposé sur la base chauffante 4 (celle-ci reposant sur la plaque de réception 7). De façon plus précise, dans le présent mode de réalisation, chaque organe de préhension 8 comprend une embase 19 sensiblement verticale qui prend appui sur la plaque de réception 7, et une poignée 20 qui repose sur l'embase 19, s'étend horizontalement, forme l'extrémité supérieure de l'organe de préhension 8, et sert de moyen de préhension proprement dit. Le plan supérieur de la poignée 20, de préférence, s'étend au moins jusqu'au quart de la hauteur du récipient de cuisson 5 quand celui-ci repose sur la base chauffante 4.

La périphérie de chaque poignée 20 comprend, en direction de la zone de réception de l'appareil de cuisson 2 (c'est-à-dire, en direction de la zone centrale 15 de l'empreinte 11, sans tenir compte de la composante verticale), une paroi de retenue 21. Les parois de retenue 21,21' des différentes poignées 20,20' définissent, entre elles, une section de passage légèrement supérieure à la section droite du récipient de cuisson 5. En outre, la distance séparant les extrémités latérales 22,22' de parois de retenue 21,21' adjacentes est suffisamment faible pour empêcher le passage du récipient de cuisson 5 entre les poignées par translation dans le plan horizontal. Ici, chaque paroi de retenue 21 a un profil en arc de cercle, et la distance séparant les deux extrémités latérales 22,22' des deux parois de retenues21,21' est inférieure au diamètre du récipient de cuisson 5.

Par ailleurs, dans le présent mode de réalisation, les cavités longitudinales 16 de l'empreinte 11 s'étendent jusqu'aux organes de préhension 8 (plus précisément, jusqu'aux embases 19). De plus, ici, pour faciliter la manipulation des pics par rapport à ces cavités 16, chaque embase 19 a une forme en U, l'espace entre les deux branches du U facilitant le dégagement des pics.

En outre, dans le présent exemple, la plaque de réception 7 comprend également des cavités annexes 23 définissant l'emplacement de récipients annexes associés à l'appareil (ici, des bols). En l'occurrence, les cavités annexes 23 sont disposées aux quatre coins de la plaque de réception 7.

L'appareil de cuisson 2 comprend également une couronne 24 se fixant à l'extrémité supérieure du récipient de cuisson 5, et servant pour stabiliser les pics pendant les opérations de cuisson.

L'appareil de cuisson pourrait être autre chose qu'un appareil à fondue. De plus, dans le cas d'un appareil à fondue, celui-ci pourrait avoir un dispositif de chauffe non électrique, par exemple, à alcool.

Le plateau pourrait être en bois, en matière plastique ou en céramique (par exemple, en porcelaine).

## Revendications

1. Ensemble ménager (1) comprenant, d'une part, un appareil de cuisson (2) qui comporte une base chauffante (4) et un récipient de cuisson (5) supporté, de façon amovible, par la base chauffante (4) quand l'appareil de cuisson (2) est dans son état d'utilisation, et, d'autre part, un plateau (3) qui est adapté à supporter l'appareil de cuisson (2) et qui comporte une plaque de réception (7) horizontale pour la réception l'appareil (1) et des organes de préhension (8) pour la préhension du plateau (3), **caractérisé en ce que** les organes de préhension (8) s'étendent verticalement au-delà du plan supérieur de la base chauffante (4) quand celle-ci repose sur la plaque de réception (7).

2. Ensemble ménager (1) selon la revendication 1, **caractérisé en ce que** les organes de préhension (8) sont conformés et agencés de façon à former des organes stabilisant le récipient de cuisson (5) quand il est disposé sur la base chauffante (4).

3. Ensemble ménager (1) selon la revendication 2, **caractérisé en ce que** chaque organe de préhension (8) comprend une poignée (20) dont la périphérie comprend une paroi de retenue (21,21) en direction de la zone de réception de l'appareil de cuisson (2), les parois de retenue (21,21') des différentes poignées (20,20') définissant entre elles une section de passage supérieure à la section droite du récipient de cuisson (5), et la distance séparant les extrémités latérales (22,22') de parois de retenue (21,21') adjacentes étant suffisamment faible pour empêcher le passage du récipient de cuisson (5) entre les poignées (20) par translation dans un plan horizontal.

4. Ensemble ménager (1) selon la revendication 3, **caractérisé en ce que** chaque paroi de retenue (21) a un profil en arc de cercle.

5. Ensemble ménager (1) selon l'une des revendications 1 à 4, **caractérisé en ce que** la plaque de réception (7) comprend des organes de maintien (11) adaptés à recevoir et à stabiliser la base chauffante (4) quand l'appareil de cuisson (2) est dans son état d'utilisation.

6. Ensemble ménager (1) selon la revendication 5, **caractérisé en ce que** les organes de maintien (11) sont formés par une empreinte (11) délimitée par une cloison de fond (12) et une cloison périphérique (14) limitant tout mouvement de translation de la base chauffante (4).

7. Ensemble ménager (1) selon la revendication 6, **caractérisé en ce que** l'empreinte (11) comprend une zone centrale (15) adaptée à recevoir la base chauffante (4), et deux cavités longitudinales (16) adaptées à recevoir des ustensiles de manipulation d'aliment associés à l'appareil de cuisson (2).

8. Ensemble ménager (1) selon la revendication 7, **caractérisé en ce que** les cavités longitudinales (16) s'étendent jusqu'aux organes de préhension (8).

9. Ensemble ménager (1) selon l'une des revendications 6 à 8, **caractérisé en ce que** la cloison de fond (12) de l'empreinte (11) comprend un orifice d'aération (17) traversant la plaque de réception (7) et **en ce que** le plateau (3) comporte des pieds (18).

10. Ensemble ménager (1) selon l'une des revendications 1 à 9, **caractérisé en ce que** l'appareil de cuisson (2) est un appareil à fondue, le récipient de cuisson (5) étant formé par le caquelon, et les ustensiles de manipulation par des pics.

## Claims

1. Domestic assembly (1) comprising, on the one hand, a cooking appliance (2) which comprises a heating base (4) and a cooking receptacle (5) supported, in a removable manner, by the heating base (4) when the cooking appliance (2) is in its state of use, and, on the other hand, a tray (3) which is adapted to support the cooking appliance (2) and which comprises a horizontal receiving plate (7) for receiving the appliance (2) and gripping members (8) for gripping the tray (3), **characterized in that** the gripping members (8) extend vertically beyond the upper plane of the heating base (4) when the latter rests on the receiving plate (7).

2. Domestic assembly (1) according to Claim 1, **characterized in that** the gripping members (8) are made and arranged so as to form members stabilizing the cooking receptacle (5) when it is placed on the heating base (4).

3. Domestic assembly (1) according to Claim 2, **characterized in that** each gripping member (8) comprises a handle (20) of which the periphery comprises a retaining wall (21, 21') facing the zone of reception of the cooking appliance (2), the retaining walls (21, 21') of the various handles (20, 20') defining between them a passageway section greater than the cross section of the cooking receptacle (5), and the distance separating the lateral ends (22, 22') of adjacent retaining walls (21, 21') being sufficiently small to prevent the cooking receptacle (5) from passing between the handles (20) by translation in a horizontal plane.

4. Domestic assembly (1) according to Claim 3, **characterized in that** each retaining wall (21) has a circularly arcuate profile.

5. Domestic assembly (1) according to one of Claims 1 to 4, **characterized in that** the receiving plate (7) comprises holding members (11) adapted to receive and to stabilize the heating base (4) when the cooking appliance (2) is in its state of use.

6. Domestic assembly (1) according to Claim 5, **characterized in that** the holding members (11) are formed by a recess (11) delimited by a bottom partition (12) and a peripheral partition (14) limiting all translational movement of the heating base (4).

7. Domestic assembly (1) according to Claim 6, **characterized in that** the recess (11) comprises a central zone (15) adapted to receive the heating base (4) and two longitudinal cavities (16) adapted to receive food-handling utensils associated with the cooking appliance (2).

8. Domestic assembly (1) according to Claim 7, **characterized in that** the longitudinal cavities (16) extend up to the gripping members (8).

9. Domestic assembly (1) according to one of Claims 6 to 8, **characterized in that** the bottom partition (12) of the recess (11) comprises an aeration orifice (17) passing through the receiving plate (7) and **in that** the tray (3) comprises feet (18).

10. Domestic assembly (1) according to one of Claims 1 to 9, **characterized in that** the cooking appliance (2) is a fondue appliance, the cooking receptacle (5) being formed by the fondue pot and the handling utensils by forks.

## Patentansprüche

1. Haushalts-Kombigerät (1) mit einerseits einem Kochgerät (2), das einen Heizsockel (4) und ein Kochgefäß (5) umfasst, das durch den Heizsockel (4) lösbar abgestützt wird, wenn sich das Kochgerät (2) in seinem Benutzungszustand befindet, und andererseits einer Plattform (3), die so ausgebildet ist, dass diese das Kochgerät (2) abstützt, und die eine horizontale Aufnahmeplatte (7) für die Aufnahme des Geräts (1) und Vorspannungselemente (8) für die Vorspannung der Plattform (3) umfasst, **dadurch gekennzeichnet, dass** sich die Vorspannungselemente (8) vertikal über die obere Ebene des Heizsockels (4) hinaus erstrecken, wenn dieser auf der Aufnahmeplatte (7) aufliegt.

2. Haushalts-Kombigerät (1) nach Anspruch 1, **dadurch gekennzeichnet, dass** die Vorspannungselemente (8) so ausgebildet und angeordnet sind, dass diese Mittel zum Stabilisieren des Kochgeräts (5) bilden, wenn dieses auf dem Heizsockel (4) angeordnet ist.

3. Haushalts-Kombigerät (1) nach Anspruch 2, **dadurch gekennzeichnet, dass** jedes Vorspannungselement (8) ein Griffstück (20) umfasst, dessen Umfang eine Haltewand (21, 21) in Richtung der Aufnahmezone des Kochgeräts (2) umfasst, wobei die Haltewände (21, 21') der unterschiedlichen Griffstücke (20, 20') untereinander einen oberen Durchgangsabschnitt im Querschnitt des Kochbehälters (5) bilden und der Abstand zwischen den Seitenenden (22, 22') benachbarter Seitenwände (21, 21') ausreichend klein ist, um den Durchgang des Kochbehälters (5) zwischen den Griffstücken (20) durch Verschiebung in einer horizontalen Ebene zu verhindern.

4. Haushalts-Kombigerät (1) nach Anspruch 3, **dadurch gekennzeichnet, dass** jede Haltewand (21) ein kreisbogenförmiges Profil hat.

5. Haushalts-Kombigerät (1) nach einem der Ansprüche 1 bis 4, **dadurch gekennzeichnet, dass** die Aufnahmeplatte (7) Halteelemente (11) umfasst, die so ausgebildet sind, dass diese den Heizsockel (4) aufnehmen und stabilisieren, wenn sich das Kochgerät (2) in seinem Benutzungszustand befindet.

6. Haushalts-Kombigerät (1) nach Anspruch 5, **dadurch gekennzeichnet, dass** die Halteelemente (11) durch eine Vertiefung (11) gebildet werden, die durch eine Bodenwand (12) und eine Umfangswand (14) begrenzt ist, welche jede Translationsbewegung des Heizsockels (4) beschränken.

7. Haushalts-Kombigerät (1) nach Anspruch 6, **dadurch gekennzeichnet, dass** die Vertiefung (11) umfasst eine zentrale Zone (15), die so ausgebildet ist, dass diese den Heizsockel (4) aufnimmt, und zwei Längsvertiefungen (16), die so ausgebildet sind, dass diese Handhabungsutensilien für Lebensmittel aufnehmen können, die dem Kochgerät (2) zugeordnet sind.

8. Haushalts-Kombigerät (1) nach Anspruch 7, **dadurch gekennzeichnet, dass** sich die Längsvertiefungen (16) bis zu den Vorspannungselementen (8) erstrecken.

9. Haushalts-Kombigerät (1) nach einem der Ansprüche 6 bis 8, **dadurch gekennzeichnet, dass** die Bodenwand (12) der Vertiefung (11) eine Belüftungsöffnung (17) umfasst, welche die Aufnahmeplatte (7) durchquert, und dass die Plattform (3) Füße (18) umfasst.

10. Haushalts-Kombigerät (1) nach einem der Ansprüche 1 bis 9, **dadurch gekennzeichnet, dass** das Kochgerät (2) ein Fonduegerät ist, der Kochbehälter (5) durch das Caquelon und die Handhabungsutensilien durch Piekser gebildet werden.
